(19) Europäisches Patentamt
European Patent Office
Office européen des brevets

(11) **EP 2 588 369 B1**

(12) **FASCICULE DE BREVET EUROPEEN**

(45) Date de publication et mention
de la délivrance du brevet:
**01.08.2018 Bulletin 2018/31**

(21) Numéro de dépôt: **11739118.5**

(22) Date de dépôt: **29.06.2011**

(51) Int Cl.:
**B64D 15/00** *(2006.01)* **H01F 38/18** *(2006.01)*
**H02K 7/18** *(2006.01)* **B64D 27/02** *(2006.01)*
**B64D 15/12** *(2006.01)* **H02P 9/46** *(2006.01)*

(86) Numéro de dépôt international:
**PCT/FR2011/051514**

(87) Numéro de publication internationale:
**WO 2012/001302 (05.01.2012 Gazette 2012/01)**

(54) **ALIMENTATION ELECTRIQUE DES EQUIPEMENTS PORTES PAR UN SUPPORT ROTATIF**

STROMVERSORGUNG FÜR EIN VON EINER DREHAUFLAGE GETRAGENES GERÄT

ELECTRICAL POWER SUPPLY FOR EQUIPMENT CARRIED BY A ROTARY SUPPORT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2010 FR 1055383**

(43) Date de publication de la demande:
**08.05.2013 Bulletin 2013/19**

(73) Titulaire: **Safran Electrical & Power**
**31702 Blagnac Cedex (FR)**

(72) Inventeurs:
• **DE WERGIFOSSE, Eric**
**F-77515 Saint Augustin (FR)**
• **DUVAL, Cédric**
**F-77920 Samois sur Seine (FR)**

(74) Mandataire: **David, Alain et al**
**Cabinet Beau de Loménie**
**158, rue de l'Université**
**75340 Paris Cedex 07 (FR)**

(56) Documents cités:
**EP-A1- 0 099 803     EP-A1- 1 953 085**
**FR-A1- 2 568 428     US-A- 5 587 643**
**US-A- 5 587 643**

## Description

### Arrière-plan de l'invention

L'invention concerne l'alimentation en énergie électrique des équipements électriques portés par un support rotatif. En particulier, l'invention se rapporte à l'alimentation en énergie électrique des équipements électriques portés par un rotor d'un moteur d'aéronef.

Il est connu d'équiper les pales portées par un rotor d'un moteur d'aéronef d'un dispositif de dégivrage, comprenant des résistances chauffantes destinées à empêcher la formation de givre. Pour alimenter un tel dispositif de dégivrage, de l'énergie électrique doit être transmise vers le rotor, comme décrit dans la demande EP 1 953 085.

Pour cela, on utilise typiquement un dispositif à balais. Toutefois, les dispositifs à balais sont généralement peu fiables et sujets à une usure rapide. Ils nécessitent donc une maintenance régulière. De plus, ils sont généralement lourds et encombrants, et peuvent poser des problèmes de compatibilité avec les huiles environnantes.

Aussi, il est connu par le brevet US 5 587 643 de transmettre de l'énergie électrique vers le rotor avec un transformateur tournant. Lorsque la puissance à transmettre est élevée, un transformateur tournant est généralement un dispositif lourd et encombrant. De plus, il est nécessaire de l'alimenter à partir d'une source dont la puissance correspond à la puissance requise au rotor. Ainsi, un convertisseur de puissance et une source d'énergie dimensionnée pour une puissance élevée sont nécessaires.

Avec la demande FR 2 568 428, il est connu qu'une machine asynchrone peut fonctionner en générateur asynchrone auto-excité. Une machine asynchrone comprend typiquement un rotor comprenant un circuit électrique fermé (rotor à cage d'écureuil ou enroulements reliés en circuit fermé) et un stator comprenant au moins un enroulement pouvant être relié à une charge. Pour permettre un fonctionnement en générateur asynchrone auto-excité, un banc capacitif destiné à fournir de la puissance réactive est relié à la machine asynchrone.

Lorsque le rotor est entraîné en rotation, et si la valeur de la capacité du banc capacitif est choisie de manière appropriée en fonction de la charge et de la vitesse de rotation, une telle machine asynchrone peut fonctionner en générateur et fournir de l'énergie électrique à la charge statorique.

### Objet et résumé de l'invention

L'invention vise à fournir un appareil dans lequel des équipements électriques portés par un support rotatif doivent être alimentés, et qui ne présente pas au moins certains des inconvénients de l'art antérieur précité. En particulier, un but de l'invention est de permettre de transmettre de l'énergie électrique vers les équipements électriques, de manière fiable et sans nécessiter un dispositif lourd et encombrant.

A cet effet, l'invention propose un appareil selon la revendication 1. Lorsque le commutateur est dans son état fermé, le circuit électrique du stator est fermé. Si le support rotatif, et donc le rotor de la machine asynchrone, sont entraînés en rotation, la machine asynchrone peut alors fonctionner en générateur asynchrone auto-excité et générer de l'énergie électrique dans l'enroulement du rotor. Autrement dit, l'invention propose d'utiliser, en tant que dispositif d'alimentation d'un équipement électrique porté par un support rotatif, une machine asynchrone configurée pour fonctionner en générateur asynchrone auto-excité, dans laquelle les rôles du stator et du rotor sont inversés par rapport au générateur asynchrone auto-excité cité en introduction. Ainsi, il est possible de générer de l'énergie électrique disponible au niveau du support rotatif, permettant d'alimenter l'équipement électrique porté par le support rotatif, sans nécessiter un dispositif à balais ou un transformateur tournant. De plus, la puissance électrique consommée par l'équipement électrique est entièrement prise sur le support rotatif. Il n'est pas nécessaire de fournir de la puissance électrique au stator de la machine asynchrone pour générer de la puissance électrique au support rotatif.

Le dispositif d'excitation peut comprendre un condensateur.

Un tel condensateur permet l'auto-excitation de la machine asynchrone lorsque la vitesse de rotation du support rotatif et la charge de l'équipement électrique sont sensiblement constantes. Dans ce cas, l'appareil peut utiliser un condensateur de capacité constante en guise de dispositif d'excitation et donc présenter une structure simple.

Le dispositif d'excitation peut comprendre un banc capacitif présentant une capacité variable ou un dispositif électronique apte à fournir un courant réactif commandé.

Cela permet de faire fonctionner la machine asynchrone en générateur asynchrone auto-excité lorsque la vitesse de rotation et/ou la charge varient.

Selon un mode de réalisation, dispositif d'excitation est relié audit circuit électrique du stator.

L'appareil peut comprendre une unité électronique de commande apte à commander la commutation dudit commutateur et à estimer un courant circulant dans ledit équipement électrique en fonction d'un signal de mesure représentatif d'un courant circulant dans ledit circuit électrique. L'unité électronique de commande peut être alimentée par un dispositif apte à prélever de la puissance à partir du stator de la machine asynchrone.

Cela permet d'éviter que le dispositif d'excitation, le commutateur et des dispositifs de diagnostique subissent les contraintes liées à la température élevée qui peut régner au niveau du support rotatif ainsi que les contraintes mécaniques liées à l'accélération centrifuge.

Selon une variante, l'appareil comprend un dispositif d'aide à l'amorçage apte à faire circuler un courant dans ledit circuit électrique lorsque le commutateur est dans son état fermé.

L'appareil peut être tout type d'appareil comprenant une partie fixe et un support rotatif portant un équipement électrique à alimenter, par exemple un moteur d'aéronef dans lequel des équipements électriques doivent être alimenté sur le rotor du moteur. Ainsi, l'invention concerne également un moteur d'aéronef comprenant en outre un arbre principal, un deuxième support rotatif et un mécanisme de transmission apte à convertir une rotation de l'arbre principal en une rotation du support rotatif dans un premier sens et en une rotation du deuxième support rotatif dans un deuxième sens opposé audit premier sens.

Selon un mode de réalisation, ledit support rotatif porte des pales, ledit équipement électrique comprenant un dispositif antigivre incluant des résistances intégrées aux pales.

L'invention se rapporte aussi à un procédé d'alimentation d'un équipement électrique selon la revendication 9.

Brève description des dessins

L'invention sera mieux comprise à la lecture de la description faite ci-après, à titre indicatif mais non limitatif, en référence aux dessins annexés, sur lequel :

- la figure 1 est une vue en perspective d'un moteur d'aéronef selon un mode de réalisation de l'invention,
- la figure 2 est une vue en coupe partielle du moteur de la figure 1,
- la figure 3 est un schéma d'un dispositif d'alimentation du moteur de la figure 1,
- la figure 4 est un schéma électrique équivalent pour une phase du dispositif d'alimentation de la figure 3, et
- les figures 5 et 6 sont des figures similaires respectivement aux figures 3 et 4, représentant une variante de réalisation.

Description détaillée de modes de réalisation

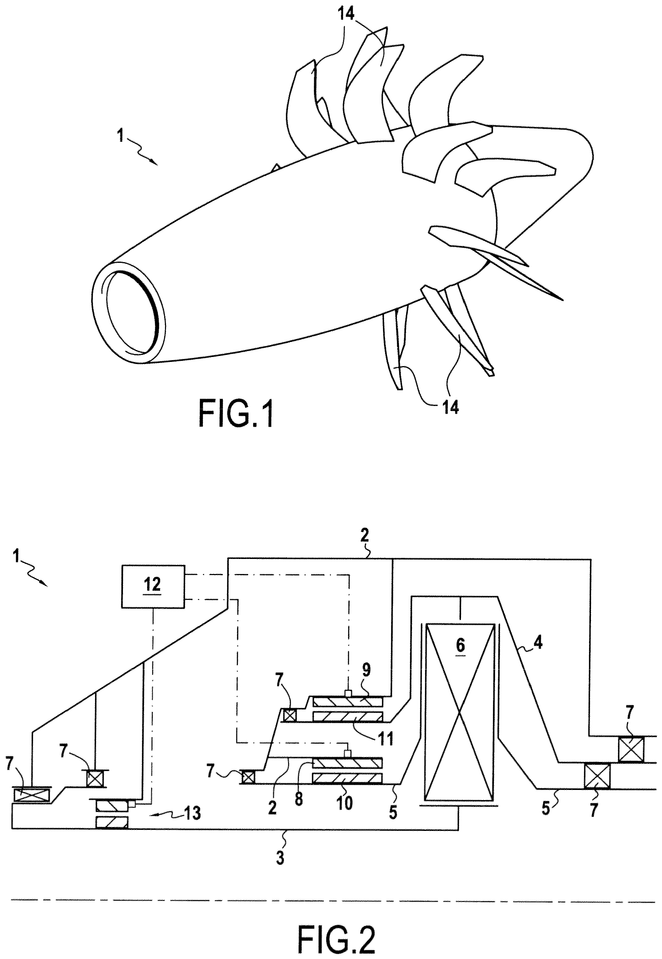

La figure 1 représente une vue en perspective d'un moteur 1 d'aéronef, représenté de manière très schématique. Le moteur 1 est un moteur du type soufflante non-carénée présentant deux supports rotatifs contrarotatifs. Chaque support rotatif porte des pales 14. La vue de la figure 2 représente schématiquement la partie du moteur 1 au niveau d'un mécanisme de transmission (« *Power Gear Box* » en anglais) permettant de convertir la rotation d'un arbre principal en une rotation des supports rotatifs dans deux sens opposés.

Le moteur 1 comprend une partie fixe 2 et un arbre principal 3 entraîné en rotation, par exemple par une turbine à gaz. Le moteur 1 comprend également un support rotatif 4 et un support rotatif 5. Des paliers 7 permettent la rotation de l'arbre principal 3 et des supports rotatifs 4 et 5 par rapport à la partie fixe 2.

Un mécanisme de transmission 6 relie l'arbre principal 3 au support rotatif 4 et au support rotatif 5. Plus précisément, lorsque l'arbre principal 3 tourne dans un premier sens, le mécanisme de transmission 6 entraîne le support rotatif 5 dans le même premier sens et le support rotatif 4 dans un deuxième sens opposé. Le mécanisme de transmission 6 réduit également la vitesse de rotation. Ainsi, par exemple, pour une vitesse de rotation typique de l'arbre principal 3 de + 6000 tr/min, le support rotatif 5 tourne à une vitesse de +900 tr/min et le support rotatif 4 tourne à une vitesse de -900 tr/min.

Les pales 14, portées par les supports rotatifs 4 et 5, ne sont pas représentées sur la figure 2. Chacun des supports rotatifs 4 et 5 porte un dispositif antigivre (non représenté) comprenant des résistances électriques intégrées aux pales 14.

Le moteur 1 comprend également un stator 8 et un stator 9 fixés à la partie fixe 2, ainsi qu'un rotor 10 porté par le support rotatif 5 du moteur 1 et un rotor 11 porté par le support rotatif 4 du moteur 1. Le stator 8 et le rotor 10 forment une première machine asynchrone permettant d'alimenter le dispositif antigivre du support rotatif 5. La configuration et le fonctionnement de cette machine asynchrone sont décrits en détail ci-après. De manière correspondante, le stator 9 et le rotor 11 forment une deuxième machine asynchrone permettant d'alimenter le dispositif antigivre du support rotatif 4. La configuration et le fonctionnement de cette machine asynchrone sont sensiblement identiques à ceux de la première machine et ne sont donc pas décrits en détail.

Enfin, le moteur 1 comprend une unité électronique de commande 12 et une génératrice 13 à aimant permanent alimentant l'unité électronique de commande 12, ce qui permet un fonctionnement en autonomie. En variante ou de manière complémentaire, l'unité électronique de commande 12 pourrait être alimentée par exemple depuis le réseau de bord de l'aéronef. En seconde variante, l'unité électronique de commande 12 peut être alimentée à la fois par le réseau de bord de l'aéronef et par un dispositif 17 capable de prélever de la puissance à partir de la machine asynchrone. Si l'application le permet, il sera dès lors possible d'assurer l'autonomie de la fonction sans rajouter de génératrice 13 auxiliaire. Le dispositif 17 sera décrit plus précisément ci-après.

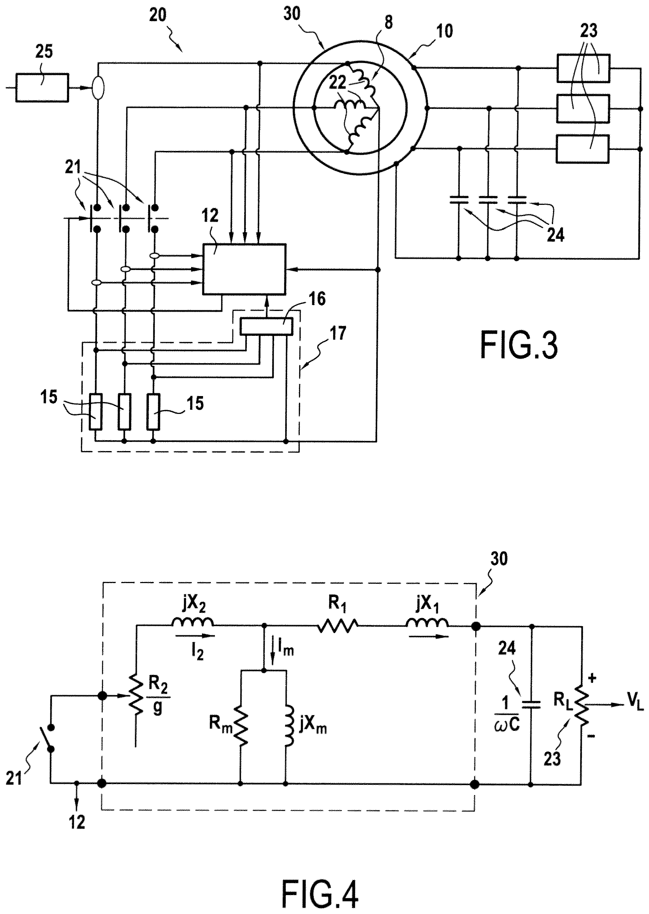

La figure 3 représente schématiquement la manière dont les résistances 23 du dispositif antigivre du support rotatif 5 sont alimentés. Comme expliqué précédemment, la machine asynchrone 30 est formée par le stator 8 et le rotor 10.

Le stator 8 comprend en circuit électrique 20 comprenant des enroulements 22 et des commutateurs 21. Dans l'exemple représenté, le circuit électrique 20 est un circuit triphasé. En variante, il pourrait s'agir d'un circuit monophasé ou polyphasé. En variante également, les enroulements 22 peuvent être remplacés par des barres.

Lorsque les commutateurs 21 sont dans leur état fermé, le circuit électrique 20 est un circuit fermé et lorsque les commutateurs 21 sont dans leur état ouvert, le circuit électrique 20 est un circuit ouvert.

L'unité électronique de commande 12 reçoit des signaux de mesure représentatifs des courants circulant dans le circuit électrique 20. Par ailleurs, l'unité électronique de commande 12 peut commander l'ouverture ou la fermeture des commutateurs 21.

Le rotor 10 de la machine asynchrone 30 comprend des enroulements (non représentés) reliés aux résistances 23. Dans l'exemple représenté, le circuit électrique du rotor 10 est un circuit triphasé. En variante, il pourrait s'agir d'un circuit monophasé ou polyphasé.

Des condensateurs 24 d'auto-excitation sont reliés au rotor 10.

La figure 4 représente le schéma électrique équivalent pour une phase de la machine asynchrone 30. Sur cette figure :

- g représente le glissement,
- $R_2$ représente la résistance statorique,
- $jX_2$ représente l'inductance de fuite statorique,
- $R_1$ représente la résistance rotorique,
- $jX_1$ représente l'inductance de fuite rotorique,
- $jX_m$ représente l'inductance de magnétisation,
- $R_m$ représente les pertes magnétiques,
- $I_m$ représente le courant de magnétisation,
- $R_L$ représente la charge, c'est-à-dire la résistance 23,
- $V_L$ représente la tension aux bornes de la résistance $R_L$, et
- C représente le condensateur 24.

Le glissement g est égale à :

$$g = (Nr/(60 * p) - Fst ) / Nr/(60 * p)$$

où :

- Nr est la vitesse de rotation du support rotatif 5, en tour par minute,
- p est le nombre de paires de pôles, et
- Fst est la fréquence du courant généré.

Le fonctionnement de la machine asynchrone 30 est le suivant.

Lorsque les commutateurs 21 sont ouverts, aucun courant électrique ne peut circuler dans le circuit électrique 20 du stator 8. Les enroulements 22 ne génèrent donc pas de champ magnétique. Ainsi, aucune tension électrique n'est générée dans les enroulements du rotor 10 et les résistances 23 ne sont pas alimentées.

Lorsque les commutateurs 21 sont fermés, un courant électrique peut circuler dans le circuit électrique 20 du stator 8. Les enroulements 22 peuvent donc générer un champ magnétique. Si la vitesse de rotation Nr du support rotatif 5 du moteur 1 se trouve dans les bonnes conditions par rapport aux valeurs des condensateurs 24, la machine asynchrone 30 peut fonctionner, grâce aux condensateurs 24, comme générateur asynchrone auto-excité, et donc générer une tension électrique dans les enroulements du rotor 10, permettant d'alimenter les résistances 23.

Lors de la fermeture des commutateurs 21, le phénomène d'autoamorçage est initié par le flux rémanent de la machine asynchrone 30. Dans un mode de réalisation, un dispositif d'aide à l'amorçage 25 est relié au circuit électrique 20. Lors de la fermeture des commutateurs 21, le dispositif d'aide à l'amorçage 25 envoie une impulsion de courant dans le circuit électrique 20, par exemple par l'intermédiaire d'un transformateur, afin de générer un champ magnétique rémanent permettant l'amorçage.

Autrement dit, la machine asynchrone 30 est configurée pour fonctionner en générateur asynchrone auto-excité, dans laquelle les rôles du stator et du rotor sont inversés par rapport au générateur asynchrone auto-excité cité en introduction. Cela permet d'alimenter les résistances 23 portées par le support rotatif 5 du moteur 1. Aucun dispositif à balais ou transformateur tournant n'est nécessaire. De plus, la puissance électrique consommée par les résistances 23 est entièrement prise sur la rotation du support rotatif 5. Il n'est pas nécessaire de fournir de la puissance électrique au stator 8 de la machine asynchrone 30 pour générer de la puissance électrique au rotor 10.

Pour permettre un tel fonctionnement en générateur asynchrone auto-excité, la valeur de la capacité des condensateurs 24 doit être choisie de manière appropriée, en fonction notamment des caractéristiques de la machine asynchrone 30, de la vitesse de rotation Nr du support rotatif 5 et de la charge, c'est-à-dire des résistances 23. La détermination de la valeur de la capacité est connue de l'homme du métier et il n'est pas nécessaire de la décrire en détail.

Comme expliqué précédemment, le moteur 1 est un moteur du type soufflante non-carénée présentant deux supports rotatifs contrarotatifs. A puissance nominale, ce type de moteur fonctionne à vitesse de rotation sensiblement constante. De plus, les résistances 23 constituent une charge résistive sensiblement constante. Ainsi, les condensateurs 24 peuvent être de simples condensateurs présentant une capacité constante.

Toutefois, l'invention n'est pas limitée à l'alimentation d'un dispositif antigivre dans un moteur de ce type. L'invention peut concerner de manière générale un appareil de tout type, comprenant une partie fixe et un support rotatif portant un équipement électrique à alimenter. Ainsi, la vitesse de rotation et la valeur de la charge ne sont pas nécessairement constantes.

Pour permettre un fonctionnement en générateur asynchrone auto-excité lorsque la vitesse de rotation et/ou la charge varie(nt), chaque condensateur 24 peut être remplacé par un banc capacitif comprenant plusieurs condensateurs et des commutateurs permettant de faire varier la valeur de la capacité du banc capacitif. En variante également, le courant réactif d'auto-excitation peut être fourni par un dispositif électrique ou électronique.

Comme expliqué précédemment, l'unité électronique de commande 12 reçoit des signaux de mesures représentatifs des courants circulants dans le circuit électrique 20. Connaissant les courants circulants dans le circuit électrique 20, l'unité électronique de commande 12 peut estimer le courant circulant dans les résistances 23 et ainsi faciliter la détection de défaut de l'ensemble du dispositif d'alimentation. L'unité électronique de commande 12 peut également recevoir d'autres signaux représentatifs notamment de la vitesse de rotation Nr, de la température,... ce qui lui permet de vérifier que le fonctionnement de la machine 30 est nominal.

Si l'unité électronique de commande 12 estime, en fonction des courants statoriques, que les courants dans les résistances 23 sont trop importants, par exemple en raison d'un défaut du type court circuit, elle peut commander l'ouverture des commutateurs 21 pour éviter une dégradation des pales 14.

On peut également constater que la commande et la surveillance de la machine asynchrone 30 peut être assurée sans aucun commutateur, capteur, ou autre élément électronique au niveau du support rotatif 5 du moteur 1. Cela permet d'éviter les contraintes liées à la température élevée (parfois plus de 200°C) qui peut régner au niveau du support rotatif 5 ainsi que les contraintes mécaniques liées à l'accélération centrifuge.

Toutefois, même si l'unité électronique de commande 12 ne détecte pas un défaut ou ne commande pas l'ouverture des commutateurs 21, les pales 14 sont protégées contre les surintensités de courant. En effet, un défaut de type court-circuit fait varier la valeur des résistances 23. Dans ce cas, les condensateurs 24 ne sont plus adaptés au fonctionnement en générateur asynchrone auto-excité et un phénomène de désamorçage se produit, conduisant à l'arrêt de la génération de puissance électrique.

Par ailleurs, comme annoncé précédemment, selon une variante, l'unité électronique de commande 12 peut être alimentée par un dispositif 17 capable de prélever de la puissance à partir du stator 8 de la machine asynchrone 30. Le dispositif 17 est représenté sur la figure 3. Pour prélever cette puissance, le dispositif 17 comporte des résistances 15 dans la ligne de chaque phase du circuit électrique 20, et un dispositif de traitement 16 des tensions prélevées sur les résistances 15. Dès que la machine asynchrone 30 est amorcée, le courant circulant dans chaque phase du circuit 20 provoque une chute de tension sur la résistance 15 de la phase correspondante et le dispositif de traitement 16 permet d'utiliser ces chutes de tensions pour alimenter l'unité électronique de commande 12. Selon une variante, les résistances 15 peuvent être remplacées éventuellement par des transformateurs.

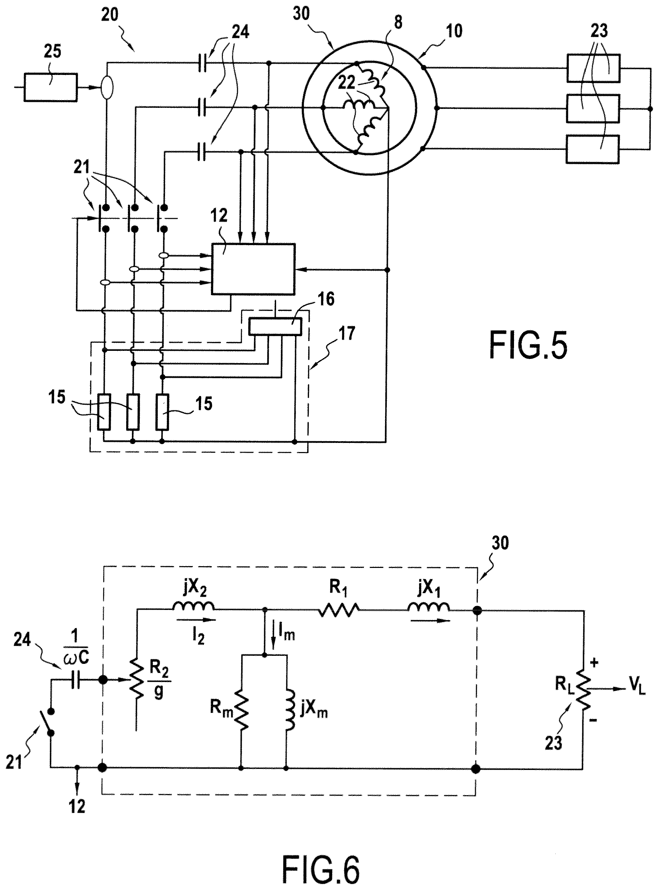

Les figures 5 et 6 sont des figures similaires aux figures 3 et 4, représentant une variante de réalisation. Les éléments identiques ou similaires à des éléments des figures 3 et 4 sont désignés par les mêmes références, et ne sont plus décrits en détail.

On peut constater que dans cette variante de réalisation, les condensateurs 24 sont intégrés, en série, dans le circuit électrique 20 du stator 8. Les condensateurs 24 peuvent donc être placés à distance du support rotatif 5 du moteur 1, ce qui permet d'éviter également les contraintes liées à la température élevée (parfois plus de 200°C) qui peut régner au niveau du support rotatif 5 ainsi que les contraintes mécaniques liées à l'accélération centrifuge.

La figure 2 représente un exemple de positionnement des stators 8 et 9 et des rotors 10 et 11 dans le moteur 1. D'autres positionnements peuvent être envisagés en variante. De plus, seul un des supports rotatifs 4 et 5 peut être équipé d'une machine asynchrone. Par ailleurs, plusieurs machines asynchrones peuvent être prévues pour un des supports rotatifs 4 et 5. Par exemple, dans le cas ou le dispositif antigivre comprend plusieurs groupes de résistance, chaque groupe devant être alimenté successivement selon un cycle prédéfini, le moteur 1 peut comprendre une machine asynchrone par groupe.

Enfin, on a décrit l'alimentation du dispositif antigivre en fonctionnement nominal, lorsque l'arbre principal 3 et les supports rotatifs 4 et 5 du moteur 1 sont entraînés en rotation à vitesse nominale. Dans une variante de réalisation, il est également possible d'alimenter le dispositif antigivre à l'arrêt ou à faible vitesse de rotation en utilisant la machine asynchrone 30 en mode transformateur. A cet effet, le moteur 1 comprend une source de tension alternative qui peut être reliée au circuit électrique 20.

## Revendications

1. Appareil (1) comprenant une partie fixe (2), un support rotatif (4, 5) apte à être entraîné en rotation par rapport à ladite partie fixe (2), au moins un équipement électrique (23) porté par ledit support rotatif (4, 5), et un dispositif d'alimentation apte à fournir de l'énergie électrique audit équipement électrique (23),
   ledit dispositif d'alimentation comprenant une machine asynchrone (30) comprenant un stator (8, 9) fixé à ladite partie fixe et un rotor (10, 11) porté par ledit support rotatif, et un dispositif d'excitation (24),
   **caractérisé en ce que**
   ledit stator (8) présente un circuit électrique (20) incluant au moins un enroulement (22) et au moins un commutateur (21) apte à commuter entre un état ouvert dans lequel ledit circuit électrique est ouvert et un état fermé dans lequel ledit circuit électrique est fermé,

ledit rotor (10) comprenant au moins un enroulement relié audit équipement électrique (23),

ledit dispositif d'excitation (24) comprenant au moins un condensateur en série avec ledit au moins un enroulement dudit stator pour fournir un courant réactif audit circuit électrique du stator.

2. Appareil selon la revendication 1, dans lequel ledit au moins un condensateur comprend un banc capacitif présentant une capacité variable.

3. Appareil selon l'une des revendications 1 ou 2, dans lequel ledit dispositif d'excitation (24) est relié audit circuit électrique (20) du stator (8).

4. Appareil selon l'une des revendications 1 à 3, comprenant une unité électronique de commande (12) apte à commander la commutation dudit commutateur (21) et à estimer un courant circulant dans ledit équipement électrique (23) en fonction d'un signal de mesure représentatif d'un courant circulant dans ledit circuit électrique (20).

5. Appareil selon la revendication 4, dans lequel ladite unité électronique de commande (12) est alimentée par un dispositif (17) apte à prélever de la puissance à partir du stator (8) de la machine asynchrone (30).

6. Appareil selon l'une des revendications 1 à 5, comprenant un dispositif d'aide à l'amorçage (25) apte à faire circuler un courant dans ledit circuit électrique (20) lorsque le commutateur (21) est dans son état fermé.

7. Moteur (1) d'aéronef comprenant un appareil selon l'une des revendications 1 à 6, ledit moteur comprenant en outre un arbre principal (3), un deuxième support rotatif (4) et un mécanisme de transmission (6) apte à convertir une rotation de l'arbre principal en une rotation du support rotatif (5) dans un premier sens et en une rotation du deuxième support rotatif (4) dans un deuxième sens opposé audit premier sens.

8. Moteur d'aéronef selon la revendication 7, dans lequel ledit support rotatif (5) porte des pales (14), ledit équipement électrique (23) comprenant un dispositif antigivre incluant des résistances intégrées aux pales (14).

9. Procédé d'alimentation d'un équipement électrique (23) d'un appareil (1) comprenant une partie fixe (2), un support rotatif (4, 5) apte à être entraîné en rotation par rapport à ladite partie fixe, ledit équipement électrique (23) étant porté par ledit support rotatif, et un dispositif d'alimentation apte à fournir de l'énergie électrique audit équipement électrique, ledit dispositif d'alimentation comprenant une machine asynchrone (30) comprenant un stator (8, 9) fixé à ladite partie fixe et un rotor (10, 11) porté par ledit support rotatif, et un dispositif d'excitation (24), **caractérisé en ce que**

ledit stator présente un circuit électrique incluant au moins un enroulement (22) et au moins un commutateur (21) apte à commuter entre un état ouvert dans lequel ledit circuit électrique est ouvert et un état fermé dans lequel ledit circuit électrique est fermé,

ledit rotor comprenant au moins un enroulement relié audit équipement électrique,

ledit dispositif d'excitation comprenant au moins un condensateur en série avec ledit au moins un enroulement dudit stator et étant apte à fournir un courant réactif audit circuit électrique du stator, ledit procédé comprenant une étape consistant à faire fonctionner ladite machine asynchrone en générateur asynchrone auto-excité.

**Patentansprüche**

1. Gerät (1), umfassend einen festen Teil (2), einen drehbaren Träger (4, 5), der geeignet ist, gegenüber dem festen Teil (2) drehangetrieben zu werden, wenigstens eine elektrische Einrichtung (23), die durch den drehbaren Träger (4, 5) getragen ist, und eine Versorgungsvorrichtung, die geeignet ist, der elektrischen Einrichtung (23) elektrische Energie zu liefern,

wobei die Versorgungsvorrichtung eine Asynchronmaschine (30) mit einem Stator (8, 9), der an dem festen Teil befestigt ist, und einem Rotor (10, 11), der durch den drehbaren Träger getragen ist, sowie eine Erregungsvorrichtung (24) umfasst, **dadurch gekennzeichnet, dass**

der Stator (8) einen elektrischen Schaltkreis (20) aufweist, der wenigstens eine Wicklung (22) und wenigstens einen Schalter (21) einschließt, der geeignet ist, zwischen einem offenen Zustand, in dem der elektrische Schaltkreis geöffnet ist, und einem geschlossenen Zustand, in dem der elektrische Schaltkreis geschlossen ist, umzuschalten,

der Rotor (10) wenigstens eine Wicklung umfasst, die mit der elektrischen Einrichtung (23) verbunden ist,

die Erregungsvorrichtung (24) wenigstens einen Kondensator in Reihe mit der wenigstens einen Wicklung des Stators umfasst, um dem elektrischen Schaltkreis des Stators einen Blindstrom zu liefern.

2. Gerät nach Anspruch 1, bei dem der wenigstens eine Kondensator eine kapazitive Bank, die eine veränderliche Kapazität aufweist, umfasst.

3. Gerät nach einem der Ansprüche 1 oder 2, bei dem die Erregungsvorrichtung (24) mit dem elektrischen Schaltkreis (20) des Stators (8) verbunden ist.

**4.** Gerät nach einem der Ansprüche 1 bis 3, umfassend eine elektronische Steuereinheit (12), die geeignet ist, das Umschalten des Schalters (21) zu steuern und einen Strom zu schätzen, der in der elektrischen Einrichtung (23) in Abhängigkeit von einem Messsignal, welches für einen in dem elektrischen Schaltkreis (20) fließenden Strom repräsentativ ist, fließt.

**5.** Gerät nach Anspruch 4, bei dem die elektronische Steuereinheit (12) über eine Vorrichtung (17) versorgt wird, die geeignet ist, aus dem Stator (8) der Asynchronmaschine (30) Leistung zu entnehmen.

**6.** Gerät nach einem der Ansprüche 1 bis 5, umfassend eine Zündhilfsvorrichtung (25), die geeignet ist, in dem elektrischen Schaltkreis (20) einen Strom fließen zu lassen, wenn der Schalter (21) sich in seinem geschlossenen Zustand befindet.

**7.** Triebwerk (1) eines Luftfahrzeugs, umfassend ein Gerät nach einem der Ansprüche 1 bis 6, wobei das Triebwerk ferner eine Hauptwelle (3), einen zweiten drehbaren Träger (4) und einen Übertragungsmechanismus (6) umfasst, der geeignet ist, eine Rotation der Hauptwelle in eine Rotation des drehbaren Trägers (5) in eine erste Richtung und in eine Rotation des zweiten drehbaren Trägers (4) in eine zu der ersten Richtung entgegengesetzte zweite Richtung umzuwandeln.

**8.** Luftfahrzeugtriebwerk nach Anspruch 7, bei dem der drehbare Träger (5) Schaufeln (14) trägt, wobei die elektrische Einrichtung (23) eine Vereisungsschutzvorrichtung, welche in die Schaufeln (14) integrierte Widerstände enthält, umfasst.

**9.** Verfahren zur Versorgung einer elektrischen Einrichtung (23) eines Gerätes (1), umfassend einen festen Teil (2), einen drehbaren Träger (4, 5), der geeignet ist, gegenüber dem festen Teil (2) drehangetrieben zu werden, wobei die elektrische Einrichtung (23) durch den drehbaren Träger getragen ist, und eine Versorgungsvorrichtung, die geeignet ist, der elektrischen Einrichtung elektrische Energie zu liefern, wobei die Versorgungsvorrichtung eine Asynchronmaschine (30) mit einem Stator (8, 9), der an dem festen Teil befestigt ist, und einem Rotor (10, 11), der durch den drehbaren Träger getragen ist, sowie eine Erregungsvorrichtung (24) umfasst, **dadurch gekennzeichnet, dass** der Stator einen elektrischen Schaltkreis aufweist, der wenigstens eine Wicklung (22) und wenigstens einen Schalter (21) einschließt, der geeignet ist, zwischen einem offenen Zustand, in dem der elektrische Schaltkreis geöffnet ist, und einem geschlossenen Zustand, in dem der elektrische Schaltkreis geschlossen ist, umzuschalten,

der Rotor wenigstens eine Wicklung umfasst, die mit der elektrischen Einrichtung verbunden ist, die Erregungsvorrichtung wenigstens einen Kondensator in Reihe mit der wenigstens einen Wicklung des Stators umfasst und geeignet ist, dem elektrischen Schaltkreis des Stators einen Blindstrom zu liefern, wobei das Verfahren einen Schritt umfasst, der darin besteht, die Asynchronmaschine als selbsterregten Asynchrongenerator arbeiten zu lassen.

## Claims

**1.** Apparatus (1) comprising a fixed part (2), a rotary support (4, 5) able to be driven in rotation relative to said fixed part (2), at least one item of electrical equipment (23) carried by said rotary support (4, 5), and a power supply device able to supply electrical energy to said electrical equipment (23), said power supply device comprising an asynchronous machine (30) comprising a stator (8, 9) fixed to said fixed part and a rotor (10, 11) carried by said rotary support, and an excitation device (24),
**characterized in that** said stator (8) has an electrical circuit (20) including at least one winding (22) and at least one switch (21) able to switch between an open state in which said electrical circuit is open and a closed state in which said electrical circuit is closed, said rotor (10) comprising at least one winding connected to said electrical equipment (23), said excitation device (24) comprising at least one capacitor in series with said at least one winding of said stator to provide a reactive current to said electrical circuit of the stator.

**2.** The apparatus according to claim 1, wherein said at least one capacitor comprises a capacitor bank of variable capacity.

**3.** The apparatus according to claim 1 or 2, wherein said excitation device (24) is connected to said electrical circuit (20) of the stator (8).

**4.** The apparatus according to one of claims 1 to 3 comprising an electronic command unit (12) capable of commanding the switching of said switch (21) and of estimating a current circulating in said electrical equipment (23) in relation to a measurement signal representing a current circulating in said electrical circuit (20).

**5.** The apparatus according to claim 4, wherein said electronic command unit (12) is powered by a device (17) able to take power from the stator (8) of the asynchronous machine (30).

**6.** The apparatus according to one of claims 1 to 5, comprising a device to assist priming (25) capable of circulating a current in said electrical circuit (20) when the switch (21) is in its closed state.

7. An aircraft engine (1) comprising an apparatus according to one of claims 1 to 6, said engine further comprising a main shaft (3), a second rotary support (4) and a Power Gear Box (6) capable of converting rotation of the main shaft to rotation of the rotary support (5) in a first direction and to rotation of the second rotary support (4) in a second direction opposite said first direction.

8. The aircraft engine according to claim 7, wherein said rotary support (5) carries blades (14), said electrical equipment (23) comprising a de-icing device including resistances integrated in the blades (14).

9. A method for supplying power to an item of electrical equipment (23) of apparatus (1) comprising a fixed part (2), a rotary support (4, 5) able to be driven in rotation relative to said fixed part, said electrical equipment (23) being carried by said rotary support, and a power supply device able to supply electrical energy to said electrical equipment, said power supply device comprising an asynchronous machine (30) comprising a stator (8, 9) fixed to said fixed part and a rotor (10, 11) carried by said rotary support, and an excitation device (24), **characterized in that** said stator has an electrical circuit including at least one winding (22) and at least one switch (21) able to switch between an open position in which said electrical circuit is open and a closed position in which said electrical circuit is closed, said rotor comprising at least one winding connected to said electrical equipment, said excitation device comprising at least one capacitor in series with said at least one winding of said stator and being able to supply a reactive current to said electrical circuit of the stator, said method comprising a step to cause said asynchronous machine to function as a self-excited asynchronous generator.

FIG.1

FIG.2

FIG.3

FIG.4

FIG.5

FIG.6

## RÉFÉRENCES CITÉES DANS LA DESCRIPTION

**Documents brevets cités dans la description**

- EP 1953085 A
- US 5587643 A
- FR 2568428